(19) Europäisches Patentamt
European Patent Office
Office européen des brevets

(11) **EP 2 736 754 B1**

(12) **FASCICULE DE BREVET EUROPEEN**

(45) Date de publication et mention
de la délivrance du brevet:
**04.09.2019 Bulletin 2019/36**

(51) Int Cl.:
***B60L 7/18*** *(2006.01)*    ***B60L 7/26*** *(2006.01)*
***B60L 15/20*** *(2006.01)*    ***B60T 1/10*** *(2006.01)*

(21) Numéro de dépôt: **12748743.7**

(22) Date de dépôt: **19.07.2012**

(86) Numéro de dépôt international:
**PCT/FR2012/051708**

(87) Numéro de publication internationale:
**WO 2013/014371 (31.01.2013 Gazette 2013/05)**

(54) **PROCEDE DE PILOTAGE D'UN MOYEN DE RECUPERATION DE L'ENERGIE GENEREE AU FREINAGE D'UN VEHICULE AUTOMOBILE**

VERFAHREN ZUR STEUERUNG EINER VORRICHTUNG ZUR RÜCKGEWINNUNG DER BREMSENERGIE EINES FAHRZEUGS

CONTROL METHOD FOR A DEVICE OF BREAK ENERGY RECUPERATION OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.07.2011 FR 1102316**

(43) Date de publication de la demande:
**04.06.2014 Bulletin 2014/23**

(73) Titulaire: **Renault S.A.S.**
**92100 Boulogne-Billancourt (FR)**

(72) Inventeur: **PITA-GIL, Guillermo**
**F-78180 Montigny-le-Bretonneux (FR)**

(56) Documents cités:
**EP-A2- 0 917 978     US-A- 4 123 693**
**US-A1- 2005 060 076**

**Description**

DOMAINE TECHNIQUE AUQUEL SE RAPPORTE L'INVENTION

La présente invention concerne de manière générale le freinage d'un véhicule automobile.

Elle s'applique aux véhicules automobiles comportant un moyen de récupération de l'énergie générée au freinage, et une chaîne de transmission de couple depuis les roues vers le moyen de récupération.

Elle concerne plus particulièrement un procédé de pilotage d'un tel véhicule automobile, comprenant des étapes :

a) d'acquisition d'une instruction de freinage,

b) de mesure d'une valeur mesurée d'une caractéristique dynamique du moyen de récupération,

c) de calcul d'une première consigne intermédiaire au moyen d'un filtre préventif qui filtre ladite instruction de freinage de manière à atténuer son amplitude autour de la fréquence de résonance de la chaîne de transmission de couple,

d) de calcul d'une seconde consigne intermédiaire, élaborée pour amortir les oscillations de la chaîne de transmission de couple au moyen d'un filtre curatif qui filtre la valeur mesurée de ladite caractéristique dynamique,

e) de pilotage dudit moyen de récupération suivant une consigne de pilotage calculée en fonction desdites première et seconde consignes intermédiaires, et

f) de pilotage des freins suivant une consigne de freinage calculée en fonction de l'instruction de freinage acquise à l'étape a).

L'invention trouve une application particulièrement avantageuse dans les véhicules automobiles à propulsion électrique ou hybride, dans lesquels ledit moyen de récupération est formé par le moteur de propulsion électrique lui-même.

ARRIERE-PLAN TECHNOLOGIQUE

Dans les véhicules automobiles du type précité, le moyen de récupération est prévu en complément des freins. Il permet ainsi non seulement de freiner le véhicule, mais aussi d'emmagasiner une partie de l'énergie générée par le freinage du véhicule, afin de pouvoir la réutiliser par la suite.

Ce moyen de récupération permet ainsi de réduire la consommation énergétique du véhicule ainsi que l'usure des plaquettes de frein.

Au freinage, on observe généralement sur ce type de véhicules des phénomènes d'oscillation du couple transmis aux roues, ce qui génère des à-coups affectant le confort des passagers du véhicule et l'usure des éléments participant à la traction et au freinage du véhicule.

Ces oscillations proviennent de la chaîne de transmission de couple qui, parce que chacun de ses organes présente une rigidité et un amortissement non nuls, se déforme (en torsion, flexion, traction, compression) avec une amplitude et une fréquence qui varient en fonction du couple transmis et du vieillissement des différents composants.

On connaît alors du document FR 1100216, non encore divulgué à la date de dépôt de la présente demande, un procédé de pilotage du type précité, qui permet de piloter le moyen de récupération de telle manière que les oscillations de la chaîne de transmission de couple soient correctement amorties et que la quantité d'énergie récupérée à chaque freinage soit importante.

Si cette solution s'avère en partie satisfaisante, on observe toutefois au début de chaque freinage une amorce d'oscillations de la chaîne de transmission de couple, durant un court laps de temps, qui continue d'affecter le confort des passagers du véhicule.

Le document US2005060076 A1 est considéré comme l'état de la technique le plus proche et divulgue le préambule de la revendication indépendante 1.

OBJET DE L'INVENTION

Afin d'optimiser le confort des passagers du véhicule, la présente invention propose un procédé de pilotage optimisé pour prévenir les amorces d'oscillations de la chaîne de transmission.

Plus particulièrement, on propose selon l'invention un procédé de pilotage tel que défini dans l'introduction, dans lequel, à l'étape d), on estime une valeur prévisionnelle de ladite caractéristique dynamique à l'aide d'un modèle mathématique prévisionnel, et on calcule la seconde consigne intermédiaire en fonction également de cette valeur prévisionnelle.

La demanderesse a observé que les amorces d'oscillations de la chaîne de transmission étaient mal amorties du fait de la faible vitesse de réaction de l'unité de pilotage au moment où ces oscillations apparaissent.

On distingue en effet trois types de retards, de mesure, de calcul et de commande, qui ne permettent pas de piloter avec une réactivité suffisante le moyen de récupération d'énergie.

Les retards de mesure correspondent au laps de temps qui s'écoule entre le moment où les oscillations apparaissent et celui où elles sont effectivement détectées par l'unité de pilotage.

Les retards de calcul correspondent au laps de temps qui s'écoule entre le moment où les oscillations sont détectées par l'unité de pilotage et celui où l'unité de pilotage émet un signal de commande du moyen de récupération d'énergie qui tient compte des oscillations apparues.

Les retards de commande correspondent au laps de temps qui s'écoule entre le moment où l'unité de pilotage émet un signal de commande du moyen de récupération d'énergie qui tient compte des oscillations apparues et celui où ce signal est effectivement mis en oeuvre par le moyen de récupération d'énergie.

Ces trois retards génèrent un retard global d'environ 100 millisecondes, ce qui s'avère important eu égard à la fréquence d'oscillation de la chaîne de transmission de couple (environ 7 Hz).

Grâce à l'invention, le moyen de récupération d'énergie est piloté en fonction non seulement de la valeur mesurée (avec retard) de la caractéristique dynamique du moyen de récupération d'énergie, mais également en fonction de la valeur prévisionnelle (déterminée en avance) de cette caractéristique dynamique.

La valeur prévisionnelle de la caractéristique dynamique permet ainsi de prévenir toute amorce d'oscillation avant même que ces oscillations ne soient décelées par l'unité de pilotage, de manière que l'unité de pilotage puisse instantanément contrer ces oscillations.

La valeur mesurée de la caractéristique dynamique permet quant à elle de limiter les erreurs de prévision.

D'autres caractéristiques avantageuses et non limitatives du procédé de pilotage conforme à l'invention sont les suivantes :

- ladite consigne de pilotage, ladite première consigne intermédiaire et ladite seconde consigne intermédiaire sont des consignes de couple ;
- le moyen de récupération étant constitué par un moteur électrique, ladite caractéristique dynamique est constituée par le régime du moteur électrique ;
- à l'étape d), la seconde consigne intermédiaire est calculée en fonction de la différence entre la valeur mesurée et la valeur prévisionnelle de ladite caractéristique dynamique ;
- ladite différence est filtrée pour réduire son bruit à haute fréquence, avant d'être filtrée par le filtre curatif ;
- à l'étape c), la seconde consigne intermédiaire est calculée pour être égale à la somme entre, d'une part, ladite différence filtrée, et, d'autre part, une valeur espérée de la caractéristique dynamique ;
- la valeur espérée de la caractéristique dynamique est calculée en fonction de la consigne de pilotage et de la consigne de freinage ;
- ladite valeur prévisionnelle est calculée en fonction de ladite valeur espérée de la caractéristique dynamique, compte-tenu du retard entre la mesure effectuée à l'étape b) et le pilotage dudit moyen de récupération effectué à l'étape e) ;
- à l'étape e), la consigne de pilotage est calculée en fonction de la valeur saturée de la première consigne intermédiaire ; et
- à l'étape e), la consigne de pilotage est calculée pour être égale à la valeur saturée de la somme entre, d'une part, la seconde consigne intermédiaire, et, d'autre part, la valeur saturée de la première consigne intermédiaire.

L'invention propose également un véhicule automobile tel que défini en introduction, équipé d'une unité de pilotage agencée pour commander la mise en oeuvre du procédé de pilotage précité.

DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 est une vue très schématique d'un véhicule automobile selon l'invention, sur lequel apparaissent notamment ses freins et son moyen de récupération d'énergie ;
- la figure 2 est un schéma illustrant le système de commande des freins et du moyen de récupération d'énergie du véhicule automobile de la figure 1 ;
- la figure 3 est un schéma illustrant le filtre préventif du système de commande de la figure 2 ;
- la figure 4 est un schéma illustrant le filtre curatif du système de commande de la figure 2 ;
- la figure 5 est un graphique illustrant, sur une première courbe en trait continu, les variations de l'accélération du véhicule automobile de la figure 1 dans le temps après que le conducteur a commandé le freinage du véhicule, et, sur une seconde courbe en traits discontinus, les variations de l'accélération d'un véhicule automobile dont le système de commande serait dépourvu de modèle mathématique prévisionnel ;
- la figure 6 est un graphique illustrant, sur une première courbe en trait continu, les variations de la consigne de pilotage des freins du véhicule automobile de la figure 1 après que le conducteur a commandé le freinage du véhicule, et, sur une seconde courbe en traits discontinus, les variations de la consigne de pilotage des freins d'un véhicule automobile dont le système de commande serait dépourvu de modèle mathématique prévisionnel.

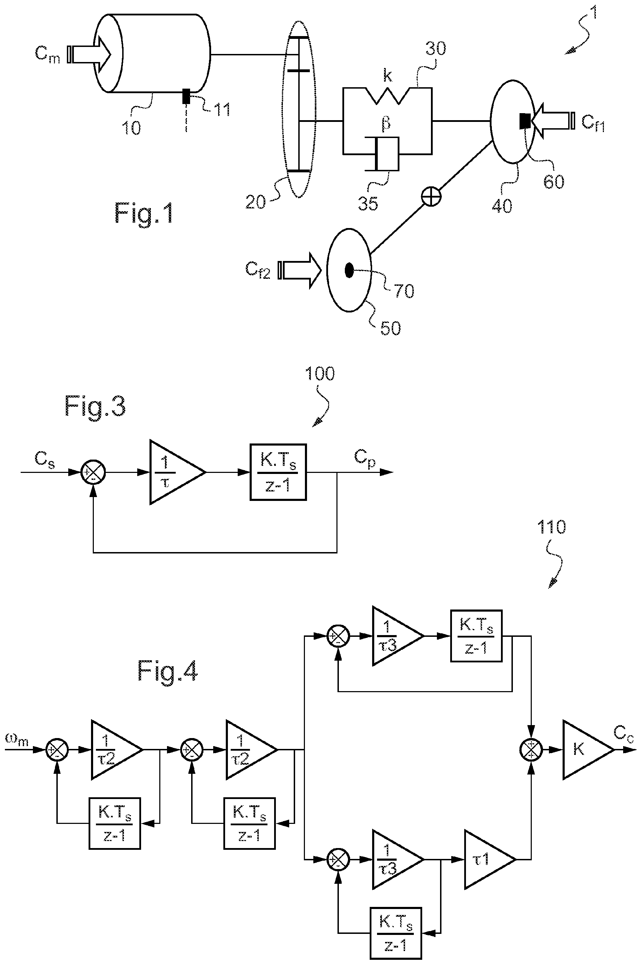

Sur la figure 1, on a représenté très schématiquement un véhicule automobile 1.

Ce véhicule automobile comporte classiquement deux roues motrices 40 (illustrées sur la figure 1 par un unique cercle) et deux roues non-motrices 50 (illustrées sur la figure 1 par un autre cercle).

Ce véhicule automobile 1 est ici un véhicule électrique. Il comporte donc une batterie d'accumulateurs (non représentée), un moteur électrique 10 alimenté par cette batterie d'accumulateurs et une chaîne de transmission 20 du couple depuis le moteur 10 vers les roues motrices 40, qui comprend en particulier un mécanisme de pignonnerie.

Comme cela est illustré de manière schématique sur la figure 1, cette chaîne de transmission 20 présente une élasticité non nulle pouvant être modélisée par un ressort 30 de rigidité notée k et par un piston 35 d'amortissement noté β.

Cette chaîne de transmission 20 est ainsi susceptible de se déformer (en torsion, flexion, traction, compression) et d'osciller avec une fréquence et une amplitude qui varient en fonction du couple transmis depuis le moteur électrique 10 vers les roues motrices 40 ou depuis les roues motrices 40 vers le moteur électrique 10. Après étude de cette chaîne de transmission, on observe qu'elle présente un mode propre auquel elle est susceptible d'osciller fortement, à une fréquence appelée fréquence principale de résonance.

Le véhicule automobile 10 comporte par ailleurs deux types de moyens de freinage, des moyens de freinage dissipatifs et un moyen de freinage récupératif (également appelé « moyen de récupération d'énergie »).

Les moyens de freinage dissipatifs sont ici des freins à disque 60, 70 qui équipent les trains de roues motrices 40 et non-motrices 50. En variante, il pourrait bien entendu s'agir de freins à tambour.

Le moyen de freinage récupératif est ici formé par le moteur électrique 10 lui-même, qui présente alors une fonction d'alternateur en ce sens qu'il est adapté à freiner les roues motrices 40 lorsque le véhicule avance et à transformer l'énergie cinétique du véhicule en une énergie électrique alimentant la batterie d'accumulateurs.

Pour piloter ses différents organes, le véhicule automobile 1 comporte un calculateur comprenant un processeur (CPU), une mémoire vive (RAM), une mémoire morte (ROM) et différentes interfaces d'entrée et de sortie.

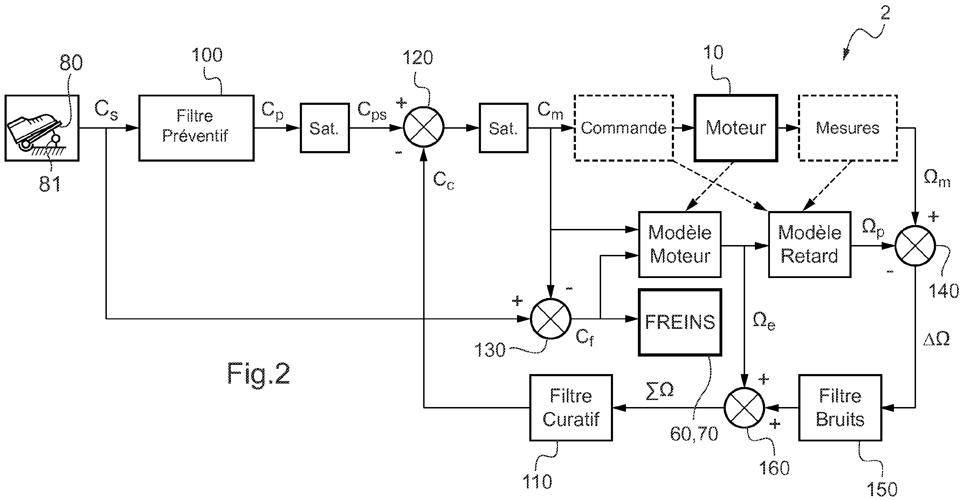

Grâce à ses interfaces d'entrée, le calculateur est adapté à recevoir des signaux d'entrée provenant de différents capteurs 11, 81. Il est en particulier adapté à acquérir la vitesse de rotation $\Omega_m$ du moteur électrique 10 au moyen d'un capteur de vitesse 11 ainsi que la position de la pédale de frein 80 et/ou la pression exercée sur la pédale de frein 80 (figure 2) au moyen d'un capteur 81.

Grâce à un logiciel 2 installé dans sa mémoire morte et illustré schématiquement sur la figure 2, le calculateur est adapté à calculer, pour chaque condition de fonctionnement du véhicule automobile 1, des consignes de pilotage du moteur électrique 10 et des freins 60, 70.

Enfin, grâce à ses interfaces de sortie, le calculateur est adapté à transmettre ces consignes de pilotage au moteur électrique 10 et aux freins 60, 70.

Le calculateur est adapté, lorsque le conducteur appuie sur la pédale de frein 80, à mettre en oeuvre un procédé de pilotage du moteur électrique 10 et des freins 60, 70 qui se décompose en onze opérations principales illustrées sur la figure 2.

La première opération est une opération d'acquisition de données.

Au cours de cette opération, grâce à ses interfaces d'entrée, le calculateur acquiert la position instantanée de la pédale de frein 80 et/ou la pression instantanée exercée sur elle par le conducteur, ainsi que la valeur mesurée $\Omega_m$ du régime du moteur électrique 10.

La seconde opération est une opération de détermination de l'intensité avec laquelle le conducteur souhaite freiner le véhicule automobile 1.

Au cours de cette opération, le calculateur déduit de la position de la pédale de frein 80 et/ou de la pression exercée sur elle, la valeur du couple de freinage souhaité Cs par le conducteur.

Ce couple de freinage souhaité Cs correspond donc à la somme des couples de freinage à appliquer au moteur électrique 10 et aux freins 60, 70 des roues motrices 40 et non-motrices 50 du véhicule automobile 1.

La troisième opération est une opération de filtrage préventif de ce couple de freinage souhaité Cs.

Au cours de cette opération, le calculateur calcule la valeur d'un premier couple intermédiaire Cp, grâce à un filtre préventif 100 qui filtre le couple de freinage souhaité Cs de manière à atténuer son amplitude autour de la fréquence de résonance de la chaîne de transmission de couple 20.

Ce filtre préventif 100 permet ainsi de filtrer la consigne de commande du moteur électrique 10, de manière à éviter que ce dernier n'excite trop le mode propre de la chaîne de transmission de couple 20, ce qui génèrerait des à-coups affectant le confort des passagers du véhicule.

L'intérêt de ce filtre préventif 100 est donc de réduire l'apparition de telles oscillations.

Tel que représenté sur la figure 3, ce filtre préventif 100 est un filtre passe-bas dont la pulsation de coupure (égale à 1/τ) est choisie en fonction de la fréquence principale de résonance de la chaîne de transmission de couple 20.

La quatrième opération est une opération de saturation du premier couple intermédiaire Cp.

Au cours de cette opération, le calculateur calcule la valeur d'un premier couple intermédiaire saturé Cps qui, contrairement au premier couple intermédiaire Cp, reste toujours inférieur au couple de freinage maximum Cmax que le moteur électrique 10 peut assumer à lui seul.

Cette opération consiste, pour le caculateur, à limiter la valeur du premier couple intermédiaire Cp en réalisant le calcul suivant :

$$Cps = min\ (Cp,\ Cmax).$$

La cinquième opération est une opération d'élaboration d'une consigne de pilotage Cm du moteur électrique 10.

Cette opération consiste à calculer, au moyen d'un soustracteur 120, un écart de couple ΔC entre le premier couple intermédiaire saturé Cps et un second couple intermédiaire Cc (dont le détail du calcul sera décrit dans la suite de cet exposé), puis à saturer cet écart de couple ΔC.

Autrement formulé, cette opération consiste, pour le calculateur, à réaliser le calcul suivant :

$$Cm = min \ (Cps\text{-}Cc, \ Cmax).$$

La consigne de pilotage Cm ainsi obtenue est alors transmise au moteur électrique 10.

La seconde opération de saturation de l'écart de couple ΔC permet alors de commander le moteur électrique 10 suivant une consigne de pilotage Cm que le moteur peut supporter.

La première opération de saturation du premier couple intermédiaire Cp n'est pas redondante avec cette seconde opération de saturation, puisqu'elle permet à la valeur du second couple intermédiaire Cc d'avoir constamment une influence sur la valeur de la consigne de pilotage Cm, en particulier lorsque le premier couple intermédiaire Cp est très supérieur au couple maximum Cmax et au second couple intermédiaire Cc.

La sixième opération est une opération d'élaboration d'une consigne de pilotage Cf des freins 60, 70.

Cette opération est réalisée à l'aide d'un soustracteur 130 qui calcule la différence entre le couple de freinage souhaité Cs et la consigne de pilotage Cm du moteur électrique 10.

Ce calcul de la consigne de pilotage Cf permet ainsi de piloter les freins 60, 70 de telle manière qu'ils prennent en charge la partie du couple de freinage souhaité Cs qui ne peut pas être assumée par le moteur électrique 10.

La consigne de pilotage Cf est alors répartie entre les freins 60, 70 des deux trains de roues motrices 40 et non-motrices 50 suivant une répartition prédéterminée, de la forme :

$$Cf = a.Cf1 + (1\text{-}a).Cf2,$$

avec

    a : une constante prédéterminée,
    Cf1 : la partie de la consigne de pilotage Cf transmise aux freins 60 des roues motrices 40, et
    Cf2 : la partie de la consigne de pilotage Cf transmise aux freins 70 des roues non-motrices 50.

Les opérations suivantes sont mises en oeuvre pour calculer la valeur du second couple intermédiaire Cc précité.

Ce second couple intermédiaire Cc permet, en fonction du régime du moteur électrique 10, de tenir compte « en temps réel » du comportement de ce moteur électrique 10 afin d'amortir au mieux les oscillations de la chaîne de transmission de couple 20, en les contrant.

Selon une caractéristique particulièrement avantageuse de l'invention, ce second couple intermédiaire Cc est calculé en fonction non seulement de la valeur mesurée $\Omega_m$ du régime-moteur, mais également en fonction d'une valeur prévisionnelle $\Omega_p$ du régime-moteur préalablement déterminée à l'aide d'un modèle mathématique prévisionnel.

Il existe en effet un temps de latence entre le moment de la mesure du régime-moteur et le moment où le moteur est piloté en fonction de cette mesure. Par conséquent, du fait de ces retards de mesure et de commande, la seule valeur mesurée $\Omega_m$ ne permettrait pas à elle seule de piloter le moteur de manière à contrer les premières oscillations de la chaîne de transmission de couple 20, lors de leur apparition.

La valeur prévisionnelle $\Omega_p$ permet donc de prévenir toute amorce d'oscillation avant même que ces oscillations ne soient détectées par le calculateur, de manière que ce dernier puisse instantanément contrer les amorces d'oscillations.

Le calcul du second couple intermédiaire Cc est plus précisément réalisé de la manière suivante.

La septième opération est une opération de calcul d'une valeur espérée $\Omega_e$ du régime-moteur.

Cette valeur espérée $\Omega_e$ correspond à la valeur que devrait normalement présenter le régime-moteur, compte tenu de la décélération du véhicule automobile.

Au cours de cette opération, le calculateur détermine la valeur espérée $\Omega_e$ du régime-moteur en fonction des consignes de pilotage Cm, Cf des freins 60, 70 et du moteur électrique 10, et en fonction de l'inertie du véhicule automobile.

On observe que ce calcul ne tient en revanche pas compte des retards de commande et de mesure, si bien que la valeur espérée $\Omega_e$ varie avec un léger retard par rapport à la valeur réelle du régime-moteur.

La huitième opération est une opération de calcul de ladite valeur prévisionnelle $\Omega_p$ du régime-moteur.

Au cours de cette opération, le calculateur corrige la valeur espérée $\Omega_e$ du régime-moteur en fonction des retards de commande et de mesure (qui sont par ailleurs connus et qui dépendent de l'architecture du moteur), au moyen d'un modèle mathématique prévisionnel.

Au cours d'une neuvième opération, le calculateur calcule, au moyen d'un soustracteur 140, l'écart de vitesses ΔΩ entre la valeur mesurée $\Omega_m$ et la valeur prévisionnelle $\Omega_p$ du régime-moteur, puis filtre cet écart de vitesses ΔΩ au moyen d'un filtre haute-fréquences 150.

Ce filtre haute-fréquences 150 est ici un filtre passe-bas du deuxième ordre qui permet de réduire le bruit dû notamment aux imprécisions de la mesure de la valeur mesurée $\Omega_m$ du régime-moteur, dans le but d'éviter que ce bruit soit ensuite amplifié et qu'il affecte sensiblement le pilotage du moteur électrique 10.

Au cours d'une dixième opération, le calculateur calcule, au moyen d'un sommateur 160, la somme

$\Sigma\Omega$ entre, d'une part, ladite différence $\Delta\Omega$ filtrée, et, d'autre part, la valeur espérée $\Omega_e$ du régime-moteur.

La onzième et ultime opération est une opération de filtrage curatif de cette somme $\Sigma\Omega$.

Au cours de cette opération, le calculateur détermine la valeur du second couple intermédiaire Cc au moyen d'un filtre curatif 110 qui filtre les variations de cette somme $\Sigma\Omega$, de manière à ce que la consigne de pilotage Cm du moteur électrique 10 permette d'amortir au mieux les oscillations de la chaîne de transmission de couple 20.

Ce filtre curatif 110 comporte une double dérivée. Comme le montre la figure 4, ce filtre curatif 110 est ici de la forme $\dfrac{K s^2 (1+\tau_1 s)}{(1+\tau_2 s)^2 (1+\tau_2 s)}$ .

De cette manière, lorsque l'appui sur la pédale de frein 80 est maintenu, le freinage initialement assuré par les freins 60, 70 est rapidement basculé vers le moteur électrique 10, qui assure alors à lui seul le freinage du véhicule automobile 1. Il est ainsi possible de récupérer une quantité d'énergie électrique maximum, dans la mesure bien entendu de la capacité du moteur électrique 10 à freiner le véhicule.

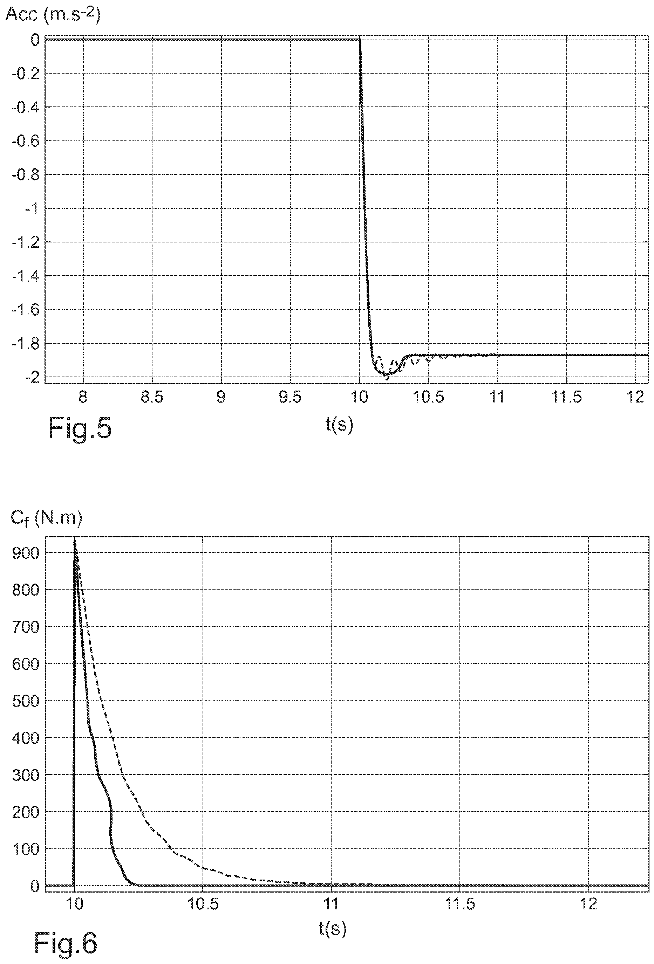

Sur les figures 5 et 6, on a illustré les résultats obtenus lorsque le conducteur appuie subitement sur le frein et le maintient appuyé. Sont représentés en traits continus les résultats obtenus grâce à l'invention. Les résultats qui seraient obtenus sans utiliser le modèle mathématique prévisionnel (c'est-à-dire en filtrant directement la valeur mesurée $\Omega_m$ par le filtre curatif pour obtenir le second couple intermédiaire Cc) sont représentés en traits pointillés.

Sur la figure 5, on a représenté les variations de l'accélération longitudinale du véhicule automobile.

On observe sur cette figure que les oscillations de l'accélération longitudinale du véhicule présentent non seulement une amplitude réduite, mais qu'elles sont également plus rapidement amorties.

Sur la figure 6, on a représenté les variations du couple de consigne de pilotage Cf des freins 60, 70.

On observe que grâce à la méthode utilisée, le couple de consigne se réduit très rapidement et s'annule en environ 250 milliseconde, de sorte que le moteur électrique 10 assume très rapidement à lui seul le freinage du véhicule automobile. La quantité d'énergie électrique récupérée est ainsi maximisée.

La présente invention n'est nullement limitée au mode de réalisation décrit et représenté, mais l'homme du métier saura y apporter toutes variantes au vu des revendications ajoutées.

On pourrait par exemple prévoir que le moteur électrique soit piloté non pas en couple mais plutôt en vitesse.

On pourrait par exemple également prévoir de calculer la valeur prévisionnelle du régime-moteur autrement, non plus à partir des consignes de pilotage des freins et du moteur électrique, mais par exemple en recherchant cette valeur dans une base de données prédéterminée.

En exemple, on pourra prévoir de remplacer le filtre préventif passe-bas par un filtre dit de limitation de la dérivée du signal.

Un tel filtre (non représenté) permet de limiter la valeur des variations de fréquence de l'instruction de freinage Cs lorsque cette fréquence dépasse un seuil maximum prédéterminé et/ou passe sous un seuil minimum prédéterminé.

On pourrait par exemple aussi prévoir d'implanter l'invention dans un véhicule hybride, auquel cas son fonctionnement demeurerait inchangé.

On pourrait par exemple également prévoir d'implanter l'invention dans un véhicule classique, uniquement propulsé par un moteur à combustion interne. Dans cette variante, le moyen de récupération de l'énergie générée par le freinage du véhicule serait constitué par un élément ad hoc, tel que par exemple un alternateur, un moyen pneumatique, mécanique ou hydraulique.

## Revendications

1. Procédé de pilotage d'un véhicule automobile (1) qui est équipé de roues (40), de freins (60, 70), d'un moyen de récupération (10) de l'énergie générée au freinage, et d'une chaîne de transmission de couple (20) depuis les roues (40) vers le moyen de récupération (10), comprenant des étapes :

   a) d'acquisition d'une instruction de freinage (Cs),
   b) de mesure d'une valeur mesurée ($\Omega_m$) d'une caractéristique dynamique du moyen de récupération (10),
   c) de calcul d'une première consigne intermédiaire (Cp) au moyen d'un filtre préventif (100) qui filtre ladite instruction de freinage (Cs) de manière à atténuer son amplitude autour de la fréquence de résonance de la chaîne de transmission de couple (20),
   d) de calcul d'une seconde consigne intermédiaire (Cc), élaborée pour amortir les oscillations de la chaîne de transmission de couple (20) au moyen d'un filtre curatif (110) qui filtre la valeur mesurée ($\Omega_m$) de ladite caractéristique dynamique,
   e) de pilotage dudit moyen de récupération (10) suivant une consigne de pilotage (Cm) calculée en fonction desdites première et seconde consignes intermédiaires (Cp, Cc), et
   f) de pilotage des freins (60, 70) suivant une consigne de freinage (Cf) calculée en fonction de l'instruction de freinage (Cs) acquise à l'étape a),

**caractérisé en ce que**,

- à l'étape c), le filtre préventif (100) est un filtre passe-bas dont la pulsation de coupure (1/T) est choisie en fonction de la fréquence principale de résonance de la chaîne de transmission de couple (20),
- à l'étape d),

- on estime une valeur prévisionnelle ($Q_p$) de ladite caractéristique dynamique à l'aide d'un modèle mathématique prévisionnel, pour permettre ainsi de prévenir toute amorce d'oscillation avant même que ces oscillations ne soient décelées par l'unité de pilotage, de manière que l'unité de pilotage puisse instantanément contrer ces oscillations,
- on calcule, au moyen d'un soustracteur (140), l'écart de vitesses ($\Delta Q$) entre la valeur mesurée ($\Omega_m$) et la valeur prévisionnelle ($Q_p$) de la caractéristique dynamique,
- on filtre cet écart de vitesses ($\Delta Q$) au moyen d'un filtre haute-fréquences (150), comme un filtre passe-bas du deuxième ordre, afin de réduire le bruit dans le but d'éviter que ce bruit soit ensuite amplifié,
- on calcule, au moyen d'un sommateur (160), la somme ($\Sigma \Omega$) entre, d'une part, ladite différence ($\Delta \Omega$) filtrée, et, d'autre part, la valeur prévisionnelle ($\Omega_p$) du régime-moteur,
- on filtre cette somme ($\Sigma \Omega$) à l'aide d'un filtre curatif, et on calcule la seconde consigne intermédiaire (Cc) en fonction de cette somme ($\Sigma \Omega$) filtrée.

2. Procédé de pilotage selon la revendication précédente, dans lequel ladite consigne de pilotage (Cm), ladite première consigne intermédiaire (Cp) et ladite seconde consigne intermédiaire (Cc) sont des consignes de couple.

3. Procédé de pilotage selon l'une des revendications précédentes, dans lequel, le moyen de récupération étant constitué par le moteur électrique (10), ladite caractéristique dynamique est constituée par le régime du moteur électrique (10).

4. Procédé de pilotage selon la revendication précédente, dans lequel, à l'étape c), la seconde consigne intermédiaire (Cc) est calculée pour être égale à la somme entre, d'une part, ladite différence ($\Delta \Omega$) filtrée, et, d'autre part, une valeur espérée ($\Omega_e$) de la caractéristique dynamique.

5. Procédé de pilotage selon la revendication précédente, dans lequel la valeur espérée ($\Omega_e$) de la caractéristique dynamique est calculée en fonction de la consigne de pilotage (Cm) et de la consigne de freinage (Cf).

6. Procédé de pilotage selon la revendication précédente, dans lequel ladite valeur prévisionnelle ($\Omega_p$) est calculée en fonction de ladite valeur espérée ($\Omega_e$) de la caractéristique dynamique, compte-tenu du retard entre la mesure effectuée à l'étape b) et le pilotage dudit moyen de récupération (10) effectué à l'étape e).

7. Procédé de pilotage selon l'une des revendications précédentes, dans lequel, à l'étape e), la consigne de pilotage (Cm) est calculée en fonction de la valeur saturée de la première consigne intermédiaire (Cp).

8. Procédé de pilotage selon la revendication précédente, dans lequel, à l'étape e), la consigne de pilotage (Cm) est calculée pour être égale à la valeur saturée de la somme entre, d'une part, la seconde consigne intermédiaire (Cc), et, d'autre part, la valeur saturée de la première consigne intermédiaire (Cp).

9. Véhicule automobile (1) comportant :

- des roues (40),
- des freins (60, 70),
- un moyen de récupération (10) de l'énergie générée au freinage du véhicule automobile (1), et
- une chaîne de transmission de couple (20) depuis les roues (40) vers le moyen de récupération (10),

**caractérisé en ce qu'**il comporte une unité de pilotage du moyen de récupération (10) et des freins (60, 70), programmée pour mettre en oeuvre un procédé de pilotage selon l'une des revendications précédentes.

**Patentansprüche**

1. Verfahren zur Steuerung eines Kraftfahrzeugs (1), das mit Rädern (40), Bremsen (60, 70), einer Rückgewinnungsvorrichtung (10) für die beim Bremsen erzeugte Energie und einem Drehmomentübertragungsstrang (20) von den Rädern (40) zu der Rückgewinnungsvorrichtung (10) ausgestattet ist, umfassend Schritte zum

a) Erfassen einer Bremsanweisung (Cs),
b) Messen eines Messwerts ($\Omega_m$) eines dynamischen Merkmals der Rückgewinnungsvorrichtung (10),
c) Berechnen eines ersten Zwischensollwerts (Cp) mittels eines präventiven Filters (100), der die Bremsanweisung (Cs) so filtert, dass ihre Amplitude um die Resonanzfrequenz des Drehmomentübertragungsstrangs (20) herum gedämpft wird,

d) Berechnen eines zweiten Zwischensollwerts (Cc), der verarbeitet wird, um die Schwingungen des Drehmomentübertragungsstrangs (20) mittels eines kurativen Filters (110) zu dämpfen, der den Messwert ($\Omega_m$) des dynamischen Merkmals filtert, zu dämpfen,

e) Steuern der Rückgewinnungsvorrichtung (10) nach einem Steuerungssollwert (Cm), der in Abhängigkeit von dem ersten und dem zweiten Zwischensollwert (Cp, Cc) berechnet wird, und zum

f) Steuern der Bremsen (60, 70) nach einem Bremssollwert (Cf), der in Abhängigkeit von der im Schritt a) erfassten Bremsanweisung (Cs) berechnet wird,

**dadurch gekennzeichnet, dass**

- im Schritt c) der präventive Filter (100) ein Tiefpassfilter ist, dessen Grenzfrequenz (1/T) in Abhängigkeit von der Hauptresonanzfrequenz des Drehmomentübertragungsstrangs (20) gewählt ist,
- im Schritt d)
- ein Vorhersagewert ($\Omega_p$) des dynamischen Merkmals mithilfe eines mathematischen Vorhersagemodells geschätzt wird, um es so zu ermöglichen, jedem Anschwingen vorzubeugen, noch bevor diese Schwingungen von der Steuerungseinheit festgestellt werden, so dass die Steuerungseinheit diesen Schwingungen sofort entgegenwirken kann,
- mittels eines Subtrahierers (140) die Drehzahldifferenz ($\Delta\Omega$) zwischen dem Messwert ($\Omega_m$) und dem Vorhersagewert ($\Omega_p$) des dynamischen Merkmals berechnet wird,
- diese Geschwindigkeitsdifferenz ($\Delta\Omega$) mittels eines Hochfrequenzfilters (150) wie ein Tiefpass zweiter Ordnung gefiltert wird, um das Rauschen zu verringern mit dem Ziel zu verhindern, dass dieses Rauschen anschließend verstärkt wird,
- mittels eines Addierers (160) die Summe ($\Sigma\Omega$) aus der gefilterten Differenz ($\Delta\Omega$) einerseits und dem Vorhersagewert ($\Omega_p$) der Motordrehzahl andererseits berechnet wird,
- diese Summe ($\Sigma\Omega$) mithilfe eines kurativen Filters gefiltert wird und der zweite Zwischensollwert (Cc) in Abhängigkeit von dieser gefilterten Summe ($\Sigma\Omega$) berechnet wird.

2. Verfahren zur Steuerung nach dem vorhergehenden Anspruch, bei dem der Steuerungssollwert (Cm), der erste Zwischensollwert (Cp) und der zweite Zwischensollwert (Cc) Drehmomentsollwerte sind.

3. Verfahren zur Steuerung nach einem der vorhergehenden Ansprüche, bei dem, wenn die Rückgewinnungsvorrichtung in dem Elektromotor (10) besteht, das dynamische Merkmal in der Drehzahl des Elektromotors (10) besteht.

4. Verfahren zur Steuerung nach dem vorhergehenden Anspruch, bei dem im Schritt c) der zweite Zwischensollwert (Cc) derart berechnet wird, dass er gleich der Summe aus der gefilterten Differenz ($\Delta\Omega$) einerseits und einem Erwartungswert ($\Omega_e$) des dynamischen Merkmals andererseits ist.

5. Verfahren zur Steuerung nach dem vorhergehenden Anspruch, bei dem der Erwartungswert ($\Omega_e$) des dynamischen Merkmals in Abhängigkeit vom Steuerungswollwert (Cm) und vom Bremssollwert (Cf) berechnet wird.

6. Verfahren zur Steuerung nach dem vorhergehenden Anspruch, bei dem der Vorhersagewert ($\Omega_p$) in Abhängigkeit vom Erwartungswert ($\Omega_e$) des dynamischen Merkmals berechnet wird unter Berücksichtigung der Verzögerung zwischen der im Schritt b) durchgeführten Messung und der im Schritt e) durchgeführten Steuerung der Rückgewinnungsvorrichtung (10).

7. Verfahren zur Steuerung nach einem der vorhergehenden Ansprüche, bei dem im Schritt e) der Steuerungssollwert (Cm) in Abhängigkeit vom gesättigten Wert des ersten Zwischensollwerts (Cp) berechnet wird.

8. Verfahren zur Steuerung nach dem vorhergehenden Anspruch, bei dem im Schritt e) der Steuerungssollwert (Cm) derart berechnet wird, dass er gleich dem gesättigten Wert der Summe aus dem zweiten Zwischensollwert (Cc) einerseits und dem gesättigten Wert des ersten Zwischensollwerts (Cp) andererseits ist.

9. Kraftfahrzeug (1), umfassend:

- Räder (40),
- Bremsen (60, 70),
- eine Rückgewinnungsvorrichtung (10) für die beim Bremsen des Kraftfahrzeugs (1) erzeugte Energie und
- einen Drehmomentübertragungsstrang (20) von den Rädern (40) zur Rückgewinnungsvorrichtung (10),

**dadurch gekennzeichnet, dass** es eine Einheit zur Steuerung der Rückgewinnungsvorrichtung (10) und der Bremsen (60, 70) umfasst, die dazu programmiert ist, ein Verfahren zur Steuerung nach einem der vorhergehenden Ansprüche umzusetzen.

## Claims

1. Method for controlling a motor vehicle (1) which is equipped with wheels (40), brakes (60, 70), a means (10) for recovering the energy generated in braking, and a torque transmission chain (20) from the wheels (40) to the recovery means (10), comprising steps:

   a) of acquiring a braking instruction (Cs),
   b) of measuring a measured value ($\Omega_m$) of a dynamic characteristic of the recovery means (10),
   c) of calculating a first intermediate setpoint (Cp) by means of a preventive filter (100) which filters said braking instruction (Cs) so as to attenuate its amplitude around the resonance frequency of the torque transmission chain (20),
   d) of calculating a second intermediate setpoint (Cc), created to damp the oscillations of the torque transmission chain (20) by means of a curative filter (110) which filters the measured value ($\Omega_m$) of said dynamic characteristic,
   e) of controlling said recovery means (10) according to a control setpoint (Cm) calculated as a function of said first and second intermediate setpoints (Cp, Cc), and
   f) of controlling the brakes (60, 70) according to a braking setpoint (Cf) calculated as a function of the braking instruction (Cs) acquired in the step a),

   **characterized in that**,

   - in the step c), the preventive filter (100) is a low-pass filter whose cutoff beat (1/T) is chosen as a function of the main resonance frequency of the torque transmission chain (20),
   - in the step d)

      - a forecast value ($\Omega_\rho$) of said dynamic characteristic is estimated using a forecast mathematical model, to thus make it possible to prevent any start of oscillation even before these oscillations are detected by the control unit, so that the control unit can instantaneously counter these oscillations,
      - a subtractor (140) is used to calculate the difference in speeds ($\Delta\Omega$) between the measured value ($\Omega_m$) and the forecast value ($\Omega_\rho$) of the dynamic characteristic,
      - this difference in speeds ($\Delta\Omega$) is filtered by means of a high-frequency filter (150), as a second order low-pass filter, in order to reduce the noise in order to prevent this noise from then being amplified,
   - a summer (160) is used to calculate the sum ($\Sigma\Omega$) between, on the one hand, said filtered difference ($\Delta\Omega$), and, on the other hand, the forecast value ($\Omega_\rho$) of the engine speed,
   - this sum ($\Sigma\Omega$) is filtered using a curative filter, and

   the second intermediate setpoint (Cc) is calculated as a function of this filtered sum ($\Sigma\Omega$).

2. Control method according to the preceding claim, in which said control setpoint (Cm), said first intermediate setpoint (Cp) and said second intermediate setpoint (Cc) are torque setpoints.

3. Control method according to either of the preceding claims, in which, the recovery means consisting of the electric motor (10), said dynamic characteristic consists of the speed of the electric motor (10).

4. Control method according to the preceding claim, in which, in the step c), the second intermediate setpoint (Cc) is calculated to be equal to the sum between, on the one hand, said filtered difference ($\Delta\Omega$), and, on the other hand, an expected value ($\Omega_e$) of the dynamic characteristic.

5. Control method according to the preceding claim, in which the expected value ($\Omega_e$) of the dynamic characteristic is calculated as a function of the control setpoint (Cm) and of the braking setpoint (Cf).

6. Control method according to the preceding claim, in which said forecast value ($\Omega_\rho$) is calculated as a function of said expected value ($\Omega_e$) of the dynamic characteristic, taking into account the delay between the measurement performed in the step b) and the control of said recovery means (10) performed in the step e).

7. Control method according to one of the preceding claims, in which, in the step e), the control setpoint (Cm) is calculated as a function of the saturated value of the first intermediate setpoint (Cp).

8. Control method according to the preceding claim, in which, in the step e), the control setpoint (Cm) is calculated to be equal to the saturated value of the sum between, on the one hand, the second intermediate setpoint (Cc), and, on the other hand, the saturated value of the first intermediate setpoint (Cp).

9. Motor vehicle (1) comprising:

   - wheels (40),
   - brakes (60, 70),

- a means (10) for recovering the energy generated in the braking of the motor vehicle (1), and
- a torque transmission chain (20) from the wheels (40) to the recovery means (10),

**characterized in that** it comprises a control unit for the recovery means (10) and for the brakes (60, 70), programmed to implement a control method according to one of the preceding claims.

Fig.1

Fig.3

Fig.4

Fig.2

Fig.5

Fig.6

**EP 2 736 754 B1**

## RÉFÉRENCES CITÉES DANS LA DESCRIPTION

**Documents brevets cités dans la description**

- FR 1100216

- US 2005060076 A1